# EUROPÄISCHE PATENTSCHRIFT

(11) **EP 1 574 316 B1**
(45) Veröffentlichungstag und Bekanntmachung des Hinweises auf die Patenterteilung: **26.07.2006**
(21) Anmeldenummer: 05004780.2
(22) Anmeldetag: 04.03.2005
(51) Int. Cl.: B29C 47/08, B29C 47/40

(54) **Getriebe für einen Doppelschneckenextruder**
Drive for a twin-screw extruder
Transmission pour extrudeuse à deux vis

(30) Priorität: 12.03.2004 DE 102004012569
(43) Veröffentlichungstag der Anmeldung: 14.09.2005
(73) Patentinhaber: A. FRIEDR. FLENDER AG, D-46395 Bocholt (DE)
(72) Erfinder: Schmeink, Franz, 46395 Bocholt (DE); Thewes, Helmut, 46397 Bocholt (DE)
(74) Vertreter: Radünz, Ingo

(56) Entgegenhaltungen:
- EP-A- 0 775 568
- EP-A- 0 860 269
- EP-A- 1 008 437
- DE-A1- 3 527 003
- US-A- 4 679 461

## Beschreibung

Die Erfindung betrifft ein Getriebe für einen Doppelschneckenextruder mit zwei unter einem Winkel zueinander angeordneten Schneckenwellen mit den Merkmalen des Oberbegriffes des Anspruches 1.

Antriebslösungen für Doppelschneckenextruder sind entlang des Triebstranges durch den charakteristischen Aufbau beginnend mit einem Motor, einer Kupplung, einem untersetzenden Zahnradgetriebe, einem Verteilergetriebe und den angekoppelten Extruderwellen im Verfahrensteil gekennzeichnet. Dabei wandelt ein Reduziergetriebe sowohl das Drehmoment wie auch die Drehzahl der meist als Elektromotor ausgebildeten Antriebsquelle um. Anschließend teilt das Verteilergetriebe die Antriebsleistung bislang ohne weitere Änderung bei einer Übersetzung von i = 1 gleichmäßig auf beide Abtriebswellen auf.

Die EP 0 775 568 A1 beschreibt ein Getriebe für einen Doppelschneckenextruder mit zwei unter einem Winkel zueinander angeordneten Schneckenwellen, bestehend aus einem rnehrstufigen Reduziergetriebe und einem Verteilergetriebe mit zwei mit den Schneckenwellen verbindbaren Abtriebssträngen, wobei der erste Abtriebsstrang aus einer ersten, durchgehenden Abtriebswelle besteht.

Aus der DE 34 20 918 A1 ist ein Getriebe bekannt, bei dem zwei konische gegenläufige Extruderschnecken mit den Abtriebswellen eines Extrudergetriebes drehfest verbunden sind. Zur Verbindung der parallelen Getriebeachsen mit den sich kreuzenden Achsen des Verfahrensteils wird in einem Abtriebsstrang hinter dem Verteilergetriebe ein Kardangelenk eingesetzt. Das Verteilergetriebe leitet in dem Hauptstrang die erste Hälfte der Antriebsleistung ohne Änderungen in die erste Extruderwelle. Die Getriebestufe zur zweiten Abtriebswelle kehrt nur die Richtung der Drehbewegung um. Eine Änderung der mechanischen Größen Drehzahl und Moment findet aufgrund der Übersetzung i = 1 nicht statt. Besonders problematisch für die Betriebssicherheit des bekannten Getriebes sind die beiden parallelen pfeilverzahnten Radsätze in einer Stufe.

Die EP 1 008 437 A1 beschreibt ein Getriebe für einen konischen Doppelschneckenextruder. Je nach Ausführungsform rotieren die Abtriebswellen gegen- oder gleichläufig. Der Antrieb zeichnet sich durch die besonderen, sehr klein bauenden Doppelzahnkupplungen aus. Damit lässt sich die wesentliche Anforderung an dieses Doppelwellengetriebe hinsichtlich eines sehr großen übertragbaren Drehmoments und eines sehr geringen Achsabstands der Schneckenwellen verwirklichen. Die Kupplungshälften der Doppelzahnkupplungen weisen an den Enden unterschiedliche Durchmesser auf, um eine Schrägstellung auf sehr kurzer Länge zu erreichen.

Aus dem Handbuch der Kunststoff-Extrusionstechnik, Band 1 Grundlagen, C. Hauser Verlag 1989, Seite 518 sind verschiedene Konzepte für Verteilergetriebe in Doppelschneckenmaschinen bekannt. Die Arten unterscheiden sich durch die Anzahl der Wellen des Verteilergetriebes. Gebräuchlich sind Getriebekonzepte mit einer Wellenanzahl zwischen 2 bis 5. In Abhängigkeit von den axialen Zusatzkräften aus dem Verfahrensteil, dem vorgegebenen Achsabstand der Abtriebswellen und den zu übertragenden Drehmomenten bieten diese Lösungen unter Berücksichtigung des jeweiligen Einzelfalls Möglichkeiten, um die erforderlichen großen Axiallager in das Gehäuse zu integrieren bzw. über die Leistungsverzweigung eine auf die Zahngeometrie angepasste spezifische Zahnbelastung zu bewerkstelligen. Wesentlich an allen Konzepten ist, dass in dem Strang der Hauptwelle keine Wandlungen erfolgen und sich Übersetzungsänderungen samt der erforderlichen sofortigen Umkehrung nur auf den Hilfszweig auswirken.

Der Erfindung liegt die Aufgabe zugrunde, das gattungsgemäße Getriebe derart zu gestalten, dass die Forderungen nach einem kompakten und zuverlässig arbeitenden Antrieb erfüllt werden, und zwar durch einen einfachen konstruktiven Aufbau mit daraufhin in besonderer Weise ausgelegten Komponenten, vorzugsweise für den oberen Leistungsbereich.

Die Aufgabe wird bei einem gattungsgemäßen Getriebe erfindungsgemäß durch die kennzeichnenden Merkmale des Anspruchs 1 gelöst. Vorteilhafte Ausgestaltungen der Erfindung sind Gegenstand der Unteransprüche.

Das erfindungsgemäße Konzept zeichnet sich durch die Abkehr von den zuvor beschriebenen, bekannten Konzepten mit der klaren räumlichen Trennung von Reduzier- und Verteilergetriebe und den neuartigen unterschiedlichen Übersetzungen zwischen dem Reduziergetriebe und den beiden Abtriebssträngen des Verteilergetriebes aus.

Die Erfindung und die mit der Erfindung verbundenen Vorteile werden nachfolgend an einem in der Zeichnung dargestellten Ausführungsbeispiel näher erläutert. Es zeigen:
Fig. 1 den Längsschnitt durch das erfindungsgemäße Getriebe,
Fig. 2 den Räderplan gemäß Schnitt I-I nach Fig. 1 und
Fig. 3 das Getriebegehäuse.

Das an einen Doppelschneckenextruder anzuschließende Getriebe besteht aus einem Reduziergetriebe 1, das von einem Motor 2 angetrieben ist, und aus einem Verteilergetriebe 3 mit zwei Abtriebssträngen. Das Reduziergetriebe 1 und das Verteilergetriebe 3 sind in einem Getriebegehäuse 4 untergebracht.

Der erste Abtriebsstrang ist durch eine durchgehende erste Abtriebswelle 5 gebildet. Der zweite Abtriebsstrang besteht aus einer ersten Teilwelle 6, einer mit der ersten Teilwelle 6 über eine Kupplung 7 verbundenen, zweiten Teilwelle 8 und aus einer zweiten Abtriebswelle 9. Die Enden der ersten und der zweiten Abtriebswelle 5, 9 sind jeweils mit einer Kupplungsverzahnung 10 versehen, über die sie mit den nicht gezeigten Schneckenwellen des Doppelschneckenextruders zu verbinden sind. Die Schneckenwellen stehen unter einem Winkel α einer Konizität zueinander, der zwischen 1° und 3° liegt. Die beiden Abtriebswellen 5, 9 des Getriebes verlaufen in Richtung der Schneckenwellen und sind daher unter dem gleichen Winkel α angeordnet. Dabei ist die erste Abtriebswelle 5 unter dem halben Winkel der Konizität zur idealen Achse des Getriebegehäuses 4 ausgerichtet.

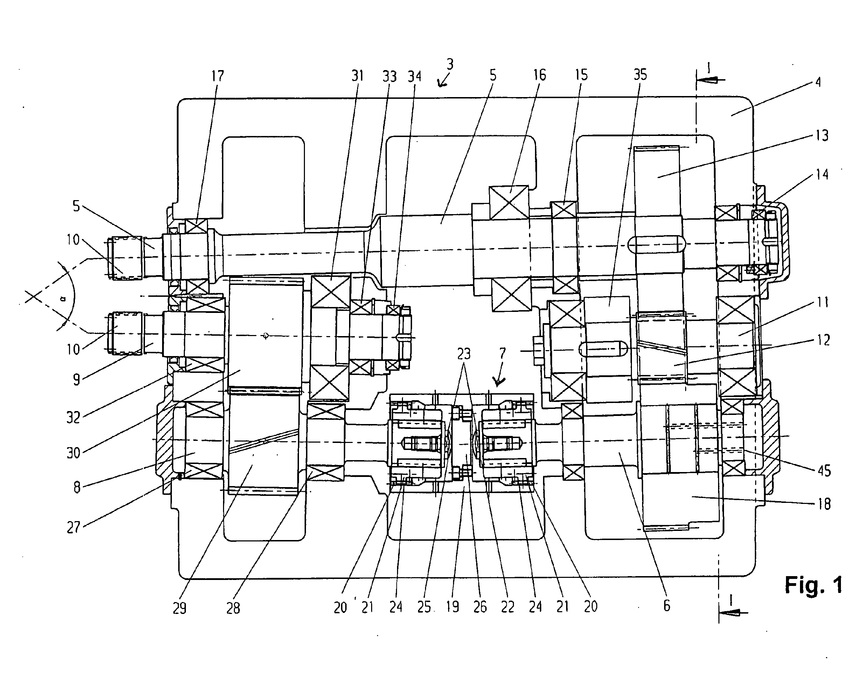

Auf der Seite des Getriebes, die dem Anschluss an den Doppelschneckenextruder abgewandt ist, wird die von dem Motor 2 aufgebrachte, in dem Reduziergetriebe 1 gewandelte Antriebsleistung in die beiden Abtriebsstränge des Verteilergetriebes eingeleitet. Die Abtriebsstufe des Reduziergetriebes 1 wird durch eine Welle 11 gebildet, auf der drehfest ein Abtriebsritzel 12 angeordnet ist. Die Achse der Welle 11 liegt in dem gezeigten Ausführungsbeispiel oberhalb des in Fig. 1 dargestellten Achsschnittes und ist zur besseren Erläuterunq des Ausführungsbeispiels hier mit in die Fig. 1 aufgenommen.

Das Abtriebsritzel 12 greift an beiden Abtriebssträngen an und teilt dadurch die Antriebsleistung auf beide Abtriebsstränge auf. Die Welle 11 mit dem Abtriebsritzel 12 stellt damit gleichzeitig die Einqanqsstufe des Verteilergetriebes 3 dar. Im Vergleich zum Stand der Technik führt diese neuartige Inteqration der beiden funktional unterscheidbaren Getriebeteile, des Reduziergetriebes und des Verteilergetriebes, zu einem kompakten Aufbau des gesamten Antriebes für einen Doppelschneckenextruder. Eine bisher benötigte Kupplung zwischen den beiden Getriebeteilen wird entbehrlich.

Der erste Abtriebsstrang mit der ersten Abtriebswelle 5 wird indirekt über das Abtriebsritzel 12 angetrieben. Das Abtriebsritzel 12 weist eine Zähnezahl z12 auf. Ein drehfest mit der ersten Abtriebswelle 5 verbundenes Zahnrad 13 mit der Zähnezahl z13 kämmt mit dem Abtriebsritzel 12. Die Verzahnung in dieser Paarung ist wie in allen anderen Paarungen von Ritzel und Zahnrad in dem erfindungsgemäßen Verteilergetriebe 3 in der Art schrägverzahnt ausgeführt, dass die resultierenden Axialkräfte der Verzahnung in den Abtriebswellen 5 und 9 den axialen Betriebskräften aus dem Doppelschneckenextruder entgegenwirken.

Die erste Abtriebswelle 5 ist in Lagern 14, 15, 16, 17 in dem Getriebegehäuse 4 abgestützt. Die Lager 14, 15, 17 sind als Radiallager und das Lager 16 ist als Axiallager ausgebildet. Das Axiallager 16 nimmt die axialen Betriebskräfte der Extruderschnecken aus dem Doppelschneckenextruder auf und leitet sie in das Getriebegehäuse 4.

Das Abtriebsritzel 12 des Reduziergetriebes 1 liegt zwischen dem Zahnrad 13 der ersten Abtriebswelle 5 und einem Zahnrad 18, das drehfest mit der zu dem zweiten Abtriebsstrang gehörenden ersten Teilwelle 6 verbunden ist. Das Zahnrad 18 der Teilwelle 6 kämmt mit dem Antriebsritzel 12. Es weist eine Zähnezahl z18 auf, die kleiner ist als die Zähnezahl z13 des im ersten Abtriebsstrang liegenden Zahnrades 13. Das führt zu einer kleineren Übersetzung in dieser Stufe des zweiten Abtriebsstranges. Diese neuartige Maßnahme bewirkt, dass in die in dem zweiten Abtriebsstrang liegende Kupplung 7 ein im Vergleich zum Abtriebsmoment des ersten Abtriebsstranges kleineres Moment eingeleitet wird.

Die Kupplung 7 ist winkelbeweglich und drehstarr und verbindet die erste Teilwelle 6 mit der zweiten Teilwelle 8. Vorzugsweise ist die Kupplung als Doppelzahnkupplung ausgebildet. Sie besteht aus einer Kupplungshülse 19, die an beiden Enden mit einer Innenverzahnung 20 versehen ist und die zwei Kupplungsteile 21 übergreift. Jeweils ein Kupplungsteil 21 ist auf eines der einander gegenüber liegenden Enden der Teilwellen 6, 8 aufgesteckt. Die Kupplungsteile 21 sind von einer Endscheibe 22 und einer Sonderschraube 23 gehalten. Die Kupplungsteile 21 sind mit einer balligen Außenverzahnung 24 versehen, die in die Innenverzahnung 20 der Kupplungshülse 19 eingreift. Diese besondere Geometrie stellt die erforderliche Winkelbeweglichkeit her. Die Kupplung 7 schwenkt dadurch die zweite Teilwelle 8 des zweiten Abtriebsstrangs um den Winkel α der Konizität der Schneckenwellen des Doppelschneckenextruders in die erforderliche Lage der zweiten Abtriebswelle 9.

Die Sonderschrauben 23 haben einen linsenförmigen Kopf 25. Eine Scheibe 26 erstreckt sich zwischen den Enden der Teilwellen quer durch die Kupplungshülse 19 und ist mit dieser verschraubt. Diese Scheibe 26 begrenzt das axiale Spiel der Kupplung 7 und stützt die Axialkräfte ab. Die linsenförmigen Köpfe 25 der Sonderschrauben 23 bilden mit der Scheibe 26 eine Axiallagerung.

Die zweite Teilwelle 8 ist durch Lager 27, 28 in dem Getriebegehäuse 4 abgestützt. Ein auf der zweiten Teilwelle 8 drehfest angeordnetes Ritzel 29 hat z29 Zähne und kämmt mit einem auf der zweiten Abtriebswelle 9 drehfest angeordneten Zahnrad 30. Erst in dieser Stufe wird das für die Kupplung 7 vorteilhafterweise niedriggehaltene Drehmoment auf den erforderlichen Betrag erhöht.

Die zweite Abtriebswelle 9 ist in Lagern 31, 32, 33 und 34 in dem Getriebegehäuse 4 abgestützt. Die Lager 32, 33, 34 sind als Radiallager und das Lager 31 ist als Axiallager ausgebildet. Dieses Axiallager 31 nimmt ebenso wie das Axiallager 16 in dem ersten Abtriebsstrang die axialen Betriebskräfte der Extruderschnecken aus dem Doppelschneckenextruder auf und leitet diese axialen Betriebskräfte in das Getriebegehäuse 4. Zusätzlich ermöglicht die unterschiedliche Gestaltung der Abtriebsstränge, dass die Axiallager 16, 31 nicht nebeneinander, sondern soweit auseinander platziert werden können, um aufgrund der dadurch möglichen Wahl größerer Lager auch größere Betriebskräfte aufnehmen zu können. Dieser Umstand bewirkt ebenfalls eine Steigerung der Leistungsfähigkeit des erfindungsmäßen Getriebes für einen konischen Doppelschneckenextruder.

Die bei dem erfindungsgemäßen Getriebe gewählte Positionierung der das Abtriebsritzel 12 tragenden Welle 11 im Zusammenspiel mit den Zahnrädern 13 und 18 ermöglicht die neuartige Anordnung der winkelbeweglichen und drehstarren Kupplung 7 innerhalb des Verteilergetriebes 3. Das in dem Getriebegehäuse 4 vorhandene Getriebeöl schmiert auch den Zahneingriff der Kupplung 7.

Die in den Einzelstufen unterschiedlichen Übersetzungen des zweiten Abtriebsstrangs, die über das ganze Verteilergetriebe betrachtet aber gleich der Übersetzung des ersten Abtriebsstrangs sind, schafft den erforderlichen Bauraum durch die entferntere Positionierung der Teilwellen 6 und 8 zu den eng beieinander liegenden Abtriebswellen 5 und 9.

Das Zahnrad 18 ist auf die erste Teilwelle 6 aufgeschrumpft. Zum Zweck der Demontage bzw. der radialen Einstellbarkeit bei der Montage sind in die erste Teilwelle 6 mehrere Ölkanäle 45 eines ölhydraulischen Pressverbands eingebracht. An die erste Teilwelle 6 ist von außen eine Pumpeinrichtung anschließbar. Sie erzeugt in einem Hydrauliköl den erforderlichen Druck, um durch radiale Weitung den Pressverband zwischen dem Zahnrad 18 und der ersten Teilwelle 6 zu lösen. Durch Verdrehen kann die gewünschte radiale Stellung eingestellt werden. Maßgeblich für die radiale Einstellunq ist hierbei die Ausrichtunq der Kupplungsverzahnung 10 der Abtriebswellen 5 und 9 zueinander. Bei gelöstem Pressverband lässt sich die zweite Abtriebswelle 9, da diese ebenfalls zum Abtriebsstrang des Pressverbands gehört, in die gewünschte Position drehen. Dadurch wird die erste Teilwelle 6 zu dem mit dem Abriebsritzel 12 in Eingriff stehenden Zahnrad 18 eingestellt. Alternativ kann der Pressverband auch in dem ersten Abtriebsstrang eingebracht werden. Eine Demontage von Verteilergetriebe 3 und Reduziergetriebe 1 ist zum Zweck der radialen Einstellunq nicht erforderlich.

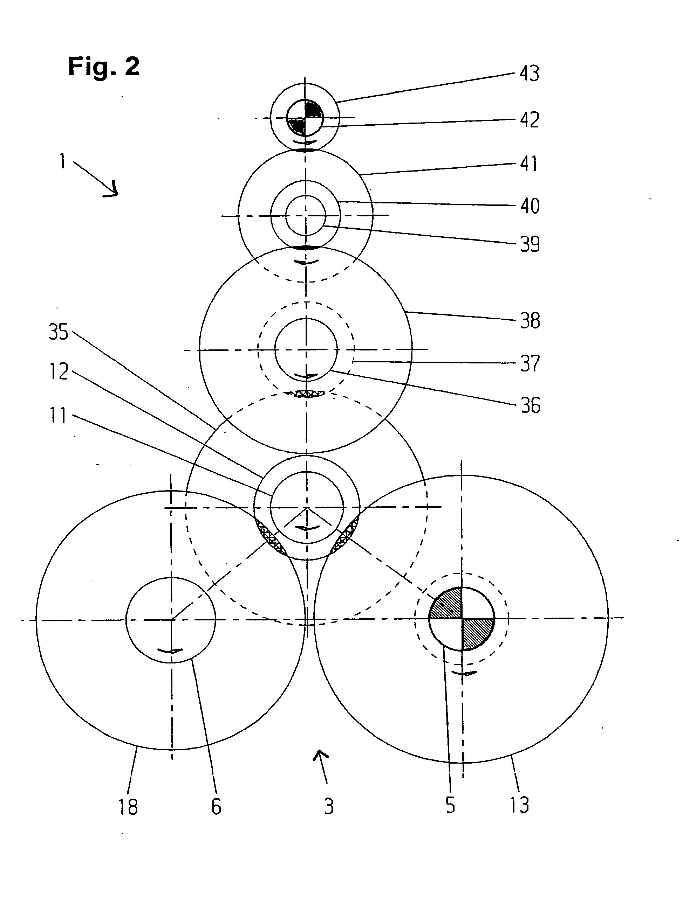

Fig. 2 zeigt den schematischen Räderplan des gesamten Getriebes. Die erste Abtriebswelle 5, die das Abtriebsritzel 12 tragende Welle 11 und die erste Teilwelle 6 des zweiten Abtriebsstranges gehören im unteren Teil des Getriebes zu dem Verteilergetriebe 3. Den oberen Teil des Getriebes bildet die das Abtriebsritzel 12 tragende Welle 11 zusammen mit dem als dreistufiges Stirnradqetriebe ausgebildeten Reduziergetriebe 1. Das Reduziergetriebe besteht aus einem auf der Welle 11 angeordneten Zahnrad 35, das mit einem Ritzel 37 auf einer Welle 36 kämmt. Die Welle 36 trägt ein Zahnrad 38, das mit einem Ritzel 40 auf einer Welle 39 kämmt. Die Welle 39 trägt ein Zahnrad 41, das mit einem Ritzel 43 in Eingriff steht, das auf einer von dem Motor 2 angetriebenen Einqanqswelle 42 angeordnet ist. Als wirkungsvolle Variante kann die Eingangsstufe des Reduziergetriebes mit der Einqanqswelle 42 und dem Ritzel 43 auch durch eine Kegelradstufe ausgestaltet werden. Dabei ist die Stufe aus dem Ritzel 43 und dem Zahnrad 41 durch geeignete Keqelräder zu ersetzen.

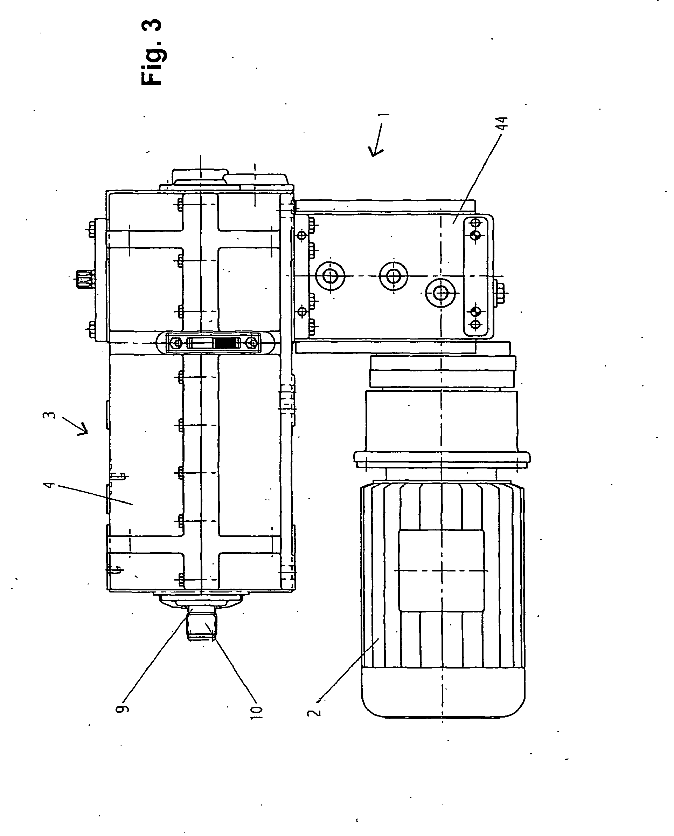

Fig. 3 zeigt eine äußere Seitenansicht auf das Gehäuse des Getriebes. Hier ist das Reduziergetriebe 1 unter dem Verteilergetriebe 3 im Getriebegehäuse 4 angebracht. In dem Übergang zwischen einem Gehäuseteil 44 des Getriebegehäuses 4 zu dem übrigen Getriebegehäuse 4 befindet sich eine hier nicht dargestellte Öffnung, durch die die Verbindung der dritten Stufe des Reduziergetriebes 1 mit der Welle 11 hergestellt wird. Das Getriebegehäuse 4 mit dem Gehäuseteil 44 bildet einen gemeinsamen Innenraum eines mehrteiligen Gehäuses. In diesem gemeinsamen Innenraum sind das Verteilergetriebe 3 und das Reduziergetriebe 1 angeordnet.

An dem Ende der Eingangswelle 42 befindet sich der Motor 2. Wahlweise bietet diese Gehäuseform auch die Möglichkeit, die Antriebswelle 42 und somit den Motor 2 an anderen Seitenwänden des Gehäuseteils 44 anzubringen. Dazu ist vorteilhafterweise die Ausführung mit der Kegelradstufe zu wählen. Ebenso besteht die Möglichkeit zu einer weiteren wirkungsvollen Variante, bei der das Reduziergetriebe 1 entsprechend dem Räderplan nach Fig. 2 oberhalb des Verteilergetriebes 3 angeordnet wird.

## Patentansprüche

1. Getriebe für einen Doppelschneckenextruder mit zwei unter einem Winkel zueinander angeordneten Schneckenwellen, bestehend aus einem mehrstufigen Reduziergetriebe (1) und einem Verteilergetriebe (3) mit zwei mit den Schneckenwellen verbindbaren Abtriebssträngen, wobei der erste Abtriebsstrang aus einer ersten, durchgehenden Abtriebswelle (5) besteht **dadurch gekennzeichnet, dass** in dem zweiten Abtriebsstrang eine winkelbewegliche drehstarre Kupplung (7) angeordnet ist, durch die der zweite Abtriebsstrang in dem Winkel der Schneckenwellen zu dem ersten Abtriebsstrang angestellt ist, ein auf der ersten Abtriebswelle (5) drehfest angeordnetes Zahnrad (13) und ein auf einer ersten Teilwelle (6) des zweiten Abtriebsstranges angeordnetes Zahnrad (18) mit einem gemeinsamen, zwischen den Zahnrädern (13, 18) angeordneten Abtriebsritzel (12) des Reduziergetriebes (1) in Eingriff stehen und dass das Reduziergetriebe (1) und das Verteilergetriebe (3) ohne räumliche Trennung mit einem gemeinsamen Innenraum in einem mehrteiligen Getriebegehäuse (4, 44) angeordnet sind.

2. Getriebe nach Anspruch 1, **dadurch gekennzeichnet, dass** die Übersetzung des Abtriebsritzels (12) des Reduziergetriebes (1) auf die mit dem Abtriebsritzel (12) in Eingriff stehenden Zahnräder (13, 18) der beiden Abtriebsstränge des Verteilergetriebes (3) unterschiedlich groß ist und dass die von dem Abtriebsritzel (12) des Reduziergetriebes (1) übertragenen Antriebsdrehmomente für die beiden Abtriebsstränge des Verteilergetriebes (3) verschieden ausgelegt sind.

3. Getriebe nach Anspruch 1 und 2, **dadurch gekennzeichnet, dass** die Übersetzung des Abtriebsritzel (12) des Reduziergetriebes (1) auf das mit dem Abtriebsritzel (12) in Eingriff stehende Zahnrad (18), das in dem zweiten, die winkelbewegliche drehstarre Kupplung (7) enthaltenden Abtriebsstrang angeordnet ist, kleiner ist als auf das in dem anderen, dem ersten Abtriebsstrang angeordnete und mit dem Abtriebsritzel (12) in Eingriff stehende Zahnrad (13) und dass das in den zweiten Abtriebsstrang und damit in die winkelbewegliche drehstarre Kupplung (7) eingeleitete Drehmoment kleiner ist als das in den ersten Abtriebsstrang eingeleitete Drehmoment.

4. Getriebe nach einem der Ansprüche 1 bis 3, **dadurch gekennzeichnet, dass** die winkelbewegliche drehstarre Kupplung (7) als Doppelzahnkupplung ausgebildet ist.

5. Getriebe nach einem der Ansprüche 1 bis 4, **dadurch gekennzeichnet, dass** die winkelbewegliche drehstarre Kupplung (7) mit einer Begrenzung des Axialspiels versehen ist.

6. Getriebe nach einem der Ansprüche 1 bis 5, **dadurch gekennzeichnet, dass** die erste Abtriebswelle (5) und die Abtriebswelle (9) des zweiten Abtriebsstranges auf Axiallager (16, 31) abgestützt sind und dass diese Axiallager (16, 31) axial zueinander versetzt in dem Getriebegehäuse (4) angeordnet sind.

7. Getriebe nach einem der Ansprüche 1 bis 6, **dadurch gekennzeichnet, dass** mindestens ein Zahnrad (18, 13) des Verteilergetriebes (3) mit einem Schrumpfsitz auf die entsprechende Welle (6, 5) aufgeschrumpft ist und über einen ölhydraulischen Pressverband lösbar und radial einstellbar ist.

8. Getriebe nach einem der Ansprüche 1 bis 7, **dadurch gekennzeichnet, dass** die Verzahnung in den Paarungen von Ritzel und Zahnrad in dem Verteilergetriebe (3) in der Art schrägverzahnt ausgeführt ist, dass die resultierenden Axialkräfte der Verzahnung in den Abtriebswellen (5, 9) den axialen Betriebskräften aus dem Doppelschneckenextruder entgegenwirken.

9. Getriebe nach einem der Ansprüche 1 bis 8, **dadurch gekennzeichnet, dass** das mehrstufige Reduziergetriebe (1) aus mehreren Stirnradstufen besteht.

10. Getriebe nach einem der Ansprüche 1 bis 8, **dadurch gekennzeichnet, dass** die Eingangsstufe des mehrstufigen Reduziergetriebes (1) eine Kegelradstufe ist.

11. Getriebe nach einem der Ansprüche 1 bis 10, **dadurch gekennzeichnet, dass** das Reduziergetriebe (1) radial versetzt zu dem Verteilergetriebe (3) angeordnet ist.

## Claims

1. Gearbox for a twin screw extruder having two worm shafts arranged at an angle to one another, and consisting of a multi-stage reduction gear (1) and a transfer box (3) having two output trains that are connectible to the worm shafts, wherein the first output train includes a first through output shaft (5), **characterised in that** a coupling (7) angularly adjustable and torsionally rigid is arranged in the second output train, via which the second output train is positioned relative to the first output train to achieve the desired angle between the worm shafts, that a gearwheel (13) arranged in torque-proof manner on the first output shaft (5) and a gearwheel (18) arranged on a first half-shaft (6) of the second output train engage with a common output pinion (12) of the reduction gear (1) arranged between the gearwheels (13, 18), and that the reduction gear (1) and the transfer box (3) are arranged without spatial separation and with a shared interior space in a multipart gearbox housing (4, 44).

2. Gearbox according to claim 1, **characterised in that** the transmission ratio of the output pinion (12) of the reduction gear (1) is different for each of the gearwheels (13, 18) of the two output trains of the transfer box (3) engaging with the output pinion (12), and that the driving torques transferred by the output pinion (12) of the reduction gear (1) for the two output trains of the transfer box (3) are dimensioned differently.

3. Gearbox according to claims 1 and 2, **characterised in that** the transmission ratio of the output pinion (12) of the reduction gear (1) to the gearwheel (18) engaging with the output pinion (12), which is arranged in the second output train comprising the angularly adjustable, torsionally rigid coupling (7), is lower than its transmission ratio to the other gearwheel (13) engaging with the output pinion (12) and arranged in the other, first output train and that the torque induced in the second output train and thus also in the angularly movable torsionally rigid coupling (7) is lower than the torque induced in the first output train.

4. Gearbox according to any of claims 1 to 3, **characterised in that** the angularly movable torsionally rigid coupling (7) is designed as a dual gear coupling.

5. Gearbox according to any of claims 1 to 4, **characterised in that** the angularly movable, torsionally rigid coupling (7) is provided with a limitation of the axial play.

6. Gearbox according to any of claims 1 to 5, **characterised in that** the first output shaft (5) and the output shaft (9) of the second output train are supported on axial bearings (16, 31), and that these axial bearings (16, 31) are arranged in the gearbox housing (4) so as to be axially offset with respect to one another.

7. Gearbox according to any of claims 1 to 6, **characterised in that** at least one gearwheel (18, 13) of the transfer box (3) is shrunk to fit on the corresponding shaft (6, 5) with a shrink fit, and is detachable and radially adjustable via an oil-hydraulic pressing assembly.

8. Gearbox according to any of claims 1 to 7, **characterised in that** the gearing in the engaging surfaces of pinion and gearwheel in the transfer box (3) is constructed in the manner of helical gearing, that the resulting axial forces of the gearing act against the axial operating forces originating from the twin screw extruder in the output shafts (5, 9).

9. Gearbox according to any of claims 1 to 8, **characterised in that** the multi-stage reduction gear (1) consists of multiple spur gear stages.

10. Gearbox according to any of claims 1 to 8, **characterised in that** the input stage of the multi-stage reduction gear (1) is a bevel gear stage.

11. Gearbox according to any of claims 1 to 10, **characterised in that** the reduction gear (1) is arranged radially offset with respect to the transfer box (3).

## Revendications

1. Transmission pour une extrudeuse à double vis comprenant deux arbres de vis disposés sous un angle mutuel, constituée d'un engrenage démultiplicateur (1) à plusieurs étages et d'une boîte de transfert (3) avec deux lignes de sortie pouvant être raccordées aux arbres de vis, la première ligne de sortie étant constituée d'un premier arbre mené (5) continu, **caractérisée en ce qu'**un accouplement (7) à mobilité angulaire et rigide à la torsion est disposé dans la seconde ligne de sortie, accouplement par lequel la seconde ligne de sortie est réglée dans l'angle des arbres de vis par rapport à la première ligne de sortie, qu'une roue dentée (13) solidaire du premier arbre mené (5) et une roue dentée (18) disposée sur un premier arbre partiel (6) de la seconde ligne de sortie sont en prise avec un pignon mené (12) commun, disposé entre les roues dentées (13, 18), de l'engrenage démultiplicateur (1), et que l'engrenage démultiplicateur (1) et la boîte de transfert (3) sont disposés sans séparation spatiale avec un espace intérieur commun dans un carter d'engrenages (4, 44) en plusieurs parties.

2. Transmission suivant la revendication 1, **caractérisée en ce que** le rapport de transmission du pignon mené (12) de l'engrenage démultiplicateur (1) aux roues dentées (13, 18), en prise avec le pignon mené (12), des deux lignes de sortie de la boîte de transfert (3) est différemment élevé, et que les couples moteurs transmis par le pignon mené (12) de l'engrenage démultiplicateur (1) sont dimensionnés différemment pour les deux lignes de sortie de la boîte de transfert (3).

3. Transmission suivant les revendications 1 et 2, **caractérisée en ce que** le rapport de transmission du pignon mené (12) de l'engrenage démultiplicateur (1) à la roue dentée (18) en prise avec le pignon mené (12), qui est disposée dans la seconde ligne de sortie comportant l'accouplement (7) à mobilité angulaire et rigide à la torsion, est plus faible que sur la roue dentée (13) disposée dans l'autre, première ligne de sortie, et en prise avec le pignon mené (12), et que le couple transmis dans la seconde ligne de sortie, et ainsi dans l'accouplement (7) à mobilité angulaire et rigide à la torsion, est plus faible que le couple transmis dans la première ligne de sortie.

4. Transmission suivant l'une des revendications 1 à 3, **caractérisée en ce que** l'accouplement (7) à mobilité angulaire et rigide à la torsion est réalisé sous forme d'accouplement à double denture.

5. Transmission suivant l'une des revendications 1 à 4, **caractérisée en ce que** l'accouplement (7) à mobilité angulaire et rigide à la torsion est muni d'une délimitation du jeu axial.

6. Transmission suivant l'une des revendications 1 à 5, **caractérisée en ce que** le premier arbre mené (5) et l'arbre mené (9) de la seconde ligne de sortie sont supportés sur des paliers lisses de butée (16, 31), et que ces paliers lisses de butée (16, 31) sont disposés en déport axial mutuel dans le carter d'engrenages (4).

7. Transmission suivant l'une des revendications 1 à 6, **caractérisée en ce qu'**au moins une roue dentée (18, 13) de la boîte de transfert (3) est emmanchée par frettage avec ajustage serré sur l'arbre correspondant (6, 5) et peut être réglée dans la direction radiale et par desserrage par l'intermédiaire d'un joint à ajustement serré à huile hydraulique.

8. Transmission suivant l'une des revendications 1 à 7, **caractérisée en ce que** la denture dans les appariements de pignon et roue dentée dans la boîte de transfert (3) est réalisée à la manière d'une denture hélicoïdale, de sorte que les forces axiales résultantes de la denture dans les arbres menés (5, 9) contrecarrent les forces de fonctionnement axiales issues de l'extrudeuse à double vis.

9. Transmission suivant l'une des revendications 1 à 8, **caractérisée en ce que** l'engrenage démultiplicateur (1) à plusieurs étages est constitué de plusieurs étages de roues droites.

10. Transmission suivant l'une des revendications 1 à 8, **caractérisée en ce que** l'étage d'entrée de l'engrenage démultiplicateur (1) à plusieurs étages est un étage de roues coniques.

11. Transmission suivant l'une des revendications 1 à 10, **caractérisée en ce que** l'engrenage démultiplicateur (1) est disposé en déport radial par rapport à la boîte de transfert (3).
